(19) Europäisches Patentamt
European Patent Office
Office européen des brevets

(11) EP 0 573 654 B1

(12) EUROPEAN PATENT SPECIFICATION

(45) Date of publication and mention
of the grant of the patent:
**12.03.1997 Bulletin 1997/11**

(51) Int Cl.$^6$: **C04B 38/00**, C04B 38/02, C04B 28/18

(21) Application number: **92920055.8**

(22) Date of filing: **18.09.1992**

(86) International application number:
**PCT/JP92/01195**

(87) International publication number:
**WO 93/13032 (08.07.1993 Gazette 1993/16)**

(54) **LIGHTWEIGHT GAS CONCRETE**

LEICHTES GASBETON

BETON MOUSSE LEGER

(84) Designated Contracting States:
**DE FR SE**

(30) Priority: **27.12.1991 JP 346743/91**

(43) Date of publication of application:
**15.12.1993 Bulletin 1993/50**

(73) Proprietor: **SUMITOMO METAL MINING COMPANY LIMITED Tokyo 105 (JP)**

(72) Inventors:
- **HAMA, Yukio**
  **Sapporo-shi, Hokkaido 063 (JP)**
- **KIMURA, Kouichi 713-2, Fukami**
  **Kanagawa 242 (JP)**
- **HANADA, Shigeru 713-2, Fukami**
  **Kanagawa 242 (JP)**
- **WATANABE, Toshihiro 713-2, Fukami**
  **Kanagawa 242 (JP)**

- **TABATA, Masayuki 6-6, Tomioka 4joh 2-chome**
  **Sapporo-shi Hokkaido 006 (JP)**

(74) Representative: **Weitzel, Wolfgang, Dr.-Ing.**
**Patentanwalt**
**Friedenstrasse 10**
**89522 Heidenheim (DE)**

(56) References cited:
**EP-A- 0 069 095       EP-A- 0 247 346**
**JP-A- 3 033 078       JP-A-55 136 162**
**JP-A-60 127 276**

- **DATABASE WPI Section Ch, Week 8144,**
  **Derwent Publications Ltd., London, GB; Class**
  **A93, AN 81-80916D & JP-A-56 120 561 (ASAHI**
  **CHEMICAL IND KK) 21 September 1981**
- **CHEMICAL ABSTRACTS, vol. 94, no. 20, 18 May**
  **1981, Columbus, Ohio, US; abstract no. 161669f,**
  **'Autoclave-cured lightweight concrete with**
  **improved waterproofness'**

**Description**

Technical Field

The present invention relates to an autoclaved lightweight concrete (hereinafter referred to as an ALC) which has excellent resistance to frost damage and is therefore suited for use in cold districts.

Background Art

ALC is manufactured by selecting a lime material such as quicklime or cement and a silicic material such as silica as main raw materials, adding water and additives such as aluminium powder to impalpable powders of the raw materials for preparing a slurry, expanding and half setting the slurry, putting the slurry into an autoclave, and aging the slurry with steam at a high temperature and under a high pressure. The ALC which is manufactured as described above is widely used as a material for building since it is light in weight thereof and excellent in fire resistance, heat insulation and working efficiency.

However, ALC panels which are used in cold districts allow surface layers thereof to be scaled and cracks to be formed on surfaces thereof, thereby posing a problem of the so-called frost damage. A mechanism of the frost damage is considered as described below. The ALC contains air voids having an average diameter of about 1 mm which are formed at the stage to expand the slurry as well as micro pores of 10000 Å or smaller which are formed at the stage to hydrate the cement and to treat the cement in the autoclave, thereby allowing the scaling of the surface layers and crack formation due to stress which is produced by volume changes caused by water which is allowed to permeate from outdoors and indoors through the micro pores into the air voids, and frozen and thawed. The ALC generally has a coefficient of water absorption of at least 25% by volume and is apt to allow cracks to be formed therein when it is frozen. As a measure for preventing the frost damage, it was conventionally carried out to add a water repellent such as silicon oil to the raw material of slurry at the manufacturing stage of the ALC for lowering the coefficient of water absorption thereof, or applying or impregnating a waterproof agent to the surfaces of the ALC panels for lowering the coefficient of water absorption below 10% by volume. However, the lowering of the coefficient of water absorption below 10% by volume makes the scaling of the surface layers to be caused more easily and the application or impregnation of the waterproof agent is effective for lowering the coefficient of water absorption only of the surface layers of the ALC panels. As a result, the application or impregnation of the waterproof agent is not so effective as to completely prevent the frost damage or the scaling of the surface layers and the effect of the waterproof agent is lessened with time lapse. Therefore, either of the preventive measures is not sufficiently effective for preventing the frost damage and it has been strongly desired to improve the measures for preventing the frost damage.

In view of the problems described above, it is a primary object of the present invention to provide an ALC (autoclaved lightweight concrete) which has a coefficient of water absorption within a range from 10 to 25% by volume and is excellent in the resistance to the frost damage when frozen, even if it contains water.

Another object of the present invention is to provide an autoclaved lightweight concrete which is usable for forming outside walls of buildings in cold districts.

Disclosure of Invention

The autoclaved lightweight concrete according to the present invention is manufactured by using, as main raw material, a siliceous and a calcareous source, and aging these raw materials with steam at a high temperature and under a high pressure, has a bulk specific gravity of 0.60 to 1.0, contains silicon oil at 0.1 to 1.0% by volume, fineness of micro pore of at least 2.5 and a percentage of volume change higher than 81,2%.

Further, the autoclaved lightweight concrete according to the present invention has a coefficient of water absorption of 10 to 25% by volume.

Usable as the silicon oil is an optional kind of silicon oil which is generally used as a water repellent, for example, dimethyl polysiloxane as it is or dimethyl polysiloxane in which some of methyl radicals are substituted with phenyl radicals, hydrogen atoms, alkyl radicals, mercaptan radicals or the like. These may be used in the condition of oil or emulsified liquid.

The frost damage of buildings is classified into two types of phenomena: scaling of surface layers caused by repeated freezing and thawing of water which permeates through outside surfaces of the ALC panels; and cracking caused by water which is supplied from indoors and frozen in the ALC at internal location of 0 °C (a freezing line). As test methods for evaluating resistance to the frost damage, we adopted a freezing and thawing test (freezing in air and thawing in water) for checking the scaling of the surface layers and a top surface freezing test for evaluating the cracking. The freezing and thawing test should desirably indicate a percentage of volume change of at least 80%, whereas the top surface freezing test should desirably provide a result of at least 100 days until cracks are formed after manufacturing of the ALC (time until crack formation occurs).

In order to prevent the frost damage, it is necessary to prevent the permeation of water through the micro pores and reduce an average diameters of the air voids. It is possible to suppress the permeation of water through the micro pores and control a coefficient of water absorption by adjusting and addition ratio of the water repellent such as the silicon oil. Further, it is possible to reduce diameters of the air voids and enhance bulk specific gravities by adjusting an addition ratio and a particle size of the expanding agent, i.e., by lowering the addition ratio or reducing the particle size of the expanding agent. Furthermore, fineness of micro pore can be enhanced by adjusting aging time in an autoclave or a water solid ratio in the slurry, i.e., by shortening the aging time or reducing the water solid ratio in the slurry.

Now, description will be made of the coefficient of water absorption. When weight of a test specimen (a cube having sides 10 cm long) in a standard dry condition thereof is represented by W, weight of the test specimen in a wetted condition thereof after it has been dipped in water at $20 \pm 2$ °C for 24 hours is designated by W' and a bulk specific gravity of the test specimen is denoted by $\rho$, the coefficient of water absorption is expressed by the formula shown below:

$$[(W'- W)/W] \times \rho \times 100 \text{ (percentage by volume)}$$

Further, the fineness of micro pore is a ratio between sums of accumulated pore volumes or means an index which represents fineness of micro pores. A larger value of the fineness of micro pore indicates a smaller diameter of micro pores or a distribution of micro pores at a higher density.

The ALC according to the present invention has a bulk specific gravity within the range from 0.60 to 1.0 since a bulk specific gravity below 0.60 allows air voids to have larger diameters, thereby enhancing the coefficient of water absorption and allowing the scaling of the surface layers to be caused more remarkably on ALC products, whereas a bulk specific gravity exceeding 1.0 allows the ALC products to have heavy weights, thereby degrading characteristics of the ALC products which are to be used as lightweight building materials.

Further, the ALC according to the present invention contains the silicon oil at a ratio within the range from 0.1 to 1.0% by weight since a content of the silicon oil below 0.1% by weight makes the water repellent effect insufficient, thereby enhancing the coefficient of water absorption and making cracks to be formed more remarkably on the freezing line, whereas a content of the silicon oil exceeding 1.0% by weight makes the water repellent characteristic of the ALC products too high, whereby the scaling of the surface layers is apt to be caused more remarkably on the surfaces of the ALC products.

Furthermore, it is desirable to select a coefficient of water absorption within a range from 10 to 25% by volume since a coefficient of water absorption below 10% by volume allows the scaling of the surface layers to be caused easily, whereas a coefficient of water absorption exceeding 25% by volume allows cracks to be formed when absorbed water is frozen.

Moreover, the ALC according to the present invention has the fineness of micro pore of 2.5 or larger since fineness of micro pore below 2.5 enhances permeability of water, thereby making the scaling of the surface layers to be caused more easily. In addition, the effect of the ALC according to the present invention is obtained as a multiplication of the effects which are obtained by reducing diameters of air voids, reducing diameters of micro pores and suppressing permeation of water with the water repellent.

Best Mode for Carrying Out the Invention

Now, the ALC according to the present invention will be described more detailedly below with reference to preferred embodiments thereof.

ALC products were manufactured as the preferred embodiments of the ALC according to the present invention through procedures which are to be described later and specimens were sampled from the ALC products by the method specified by JISA-5416, whereafter bulk specific gravity, content of dimethyl polysiloxane representing silicon oil, average diameters of air voids, fineness of micro pore and coefficients of water absorption were measured. Further, percentages of volume changes were evaluated by the freezing and thawing test, and numbers of days until formation of cracks were measured by the top surface freezing test. For comparison with results obtained by measuring arid testing the ALC products preferred as the embodiments of the present invention, specimens were sampled from the conventional standard or ordinary ALC products, and subjected to the measurements and tests which were the same as those effected on the embodiments of the ALC according to the present invention.

The results obtained by measuring and testing the embodiments and the comparison examples are summarized in Table 1 which is shown below.

Table 1

| Specimen No. | | Content of dimethyl polysiloxane (% by weight) | Bulk specific gravity | Average diameter of air voids (mm) | Fineness of micro pore | Coefficient of water absorption (% by volume) | Percentage of volume change (%) | Time until crack formation occurs (day) |
|---|---|---|---|---|---|---|---|---|
| Comparison example | 1 | 0.00 | 0.50 | 0.70 | 2.38 | 29.2 | 77.4 | 45 |
| | 2 | 0.36 | 0.48 | 0.68 | 2.42 | 7.9 | — | 120 |
| Embodiment | 1 | 0.36 | 0.63 | 0.53 | 2.66 | 12.5 | 83.6 | 171 |
| | 2 | 0.36 | 0.71 | 0.47 | 2.82 | 13.8 | 85.8 | 177 |
| | 3 | 0.38 | 0.84 | 0.40 | 2.95 | 13.4 | 88.6 | 185 |
| | 4 | 0.10 | 0.62 | 0.55 | 2.60 | 22.7 | 81.7 | 130 |
| | 5 | 0.99 | 0.60 | 0.50 | 2.70 | 10.1 | 81.2 | 180 |
| | 6 | 0.36 | 0.64 | 0.45 | 2.73 | 12.7 | 89.7 | 180 |
| | 7 | 0.36 | 0.63 | 0.53 | 3.04 | 12.4 | 92.2 | 175 |
| | 8 | 0.36 | 0.66 | 0.53 | 2.97 | 13.0 | 91.5 | 170 |

For determining the contents of dimethyl polysiloxane, method which was produced by heating the ALC powder

4

up to 950 °C in a nitrogen gas atmosphere was measured by gas chromatography and dimethyl polysiloxane were quantitatively determined by using a calibration curve which was prepared separately.

Further, the fineness of micro pore was calculated by using the following formula:

$$\{(\text{total volume of pores having diameters of 32 to 100Å}) +$$

$$(\text{total volume of pores having diameters of 32 to}$$

$$316\text{Å}) + (\text{total volume of pores having diameters of 32 to 1000Å}) +$$

$$(\text{total volume of pores having}$$

$$\text{diameters of 32 to 10000Å})\} \div$$

$$(\text{total volume of pores having diameters of 32 to 10000Å})$$

The total volumes of pores were measured by the mercury intrusion method which is generally adopted in practice with a porosimeter manufactured by Micrometrics Co., Ltd.

The freezing and thawing test which was adopted for checking the scaling of the surface layers was carried out in compliance with ASTM C-666 B method. For determining a percentage of volume change, this test was performed by cutting off a block measuring 100 mm by 100 mm by 200 mm from an ALC product as a specimen, dipping the specimen in water for 48 hours for setting the specimen in a definite water-impregnated condition, repeating 150 cycles each of which consisted of a freezing treatment at -20.0 °C for seven hours and thawing the specimen at +10.0 °C for five hours, and measuring volumes of the specimen before and after the test respectively.

The percentage of volume change was calculated by using the following formula:

$$\text{Percentage of volume change (\%)} = \{(W_{sn} - W_{wn})/ (W_{so} - W_{wo})\} \times 100$$

wherein the reference symbol $W_{sn}$ represents a mass (g) of the specimen measured after repeating n cycles of the test, the reference symbol $W_{wn}$ designates an apparent mass (g) of the specimen measured in water after repeating n cycles of the test, the reference symbol $W_{so}$ denotes a mass (g) of the specimen measured before the tests and the reference symbol $W_{wo}$ represents an apparent mass (g) of the specimen measured in water before the tests. When the percentage of volume change has a large value, it means that the ALC product allows a small change of volume.

Further, the top surface freezing test which was adopted for checking crack formation was carried out to determine a time until crack formation occurred after manufacturing of an ALC product. This test was performed by cutting off a cylindrical block measuring 100Ø by 100 mm from an ALC product as a specimen, producing a temperature difference between a top surface and a bottom surface of the specimen while maintaining the top surface at -20 °C and supplying water to the bottom surface by way of a bleached cotton cloth which was hung therefrom to a surface of water which was located 1 cm under the bottom surface and kept at + 20 °C in a water bath disposed in a space under the bottom surface, and measuring a condition of crack formation on the surface of the specimen with a strain gauge while keeping the specimen in a frozen condition.

An average diameter of air voids was determined by measuring a total number of air voids and all boundary area of air voids with an image processing device (LA-525 prepared by Pias Co.. Ltd.), and calculating with the following formula:

$$\text{Average diameter of air voids} =$$

$$2\sqrt{(\text{all boundary area of air voids/a total number of air voids})/3.14}$$

First embodiment

A slurry was prepared by adding 65 parts by weight of water, 0.4 part by weight of dimethyl polysiloxane and 0.04 part by weight of aluminium powder having an average particle size of 50 microns to a mixture which consisted of 10 parts by weight of fine powder of quicklime, 37 parts by weight of Portland cement and 53 parts by weight of fine powder of silica. After expanding the slurry, it was aged with steam in an autoclave at 180 °C for 6.5 hours.

As the comparison example 1, an ordinary ALC product was manufactured through the same procedures and the same raw materials as those selected for the first embodiment, except for dimethyl polysiloxane and aluminium which were added in no part and 0.05 part by weight respectively in the comparison example 1. The comparison example 1 had a bulk specific gravity of 0.5, an average diameter of air voids of 0.70 mm, fineness of micro pore of 2.38 and a coefficient of water absorption of 29.2% by volume. Speaking concretely, the comparison example 1 had a large average diameter of air voids, low fineness of micro pore and a high coefficient of water absorption. Further, due to a fact that the comparison example 1 had no water repellent characteristic, it showed a low percentage of volume change of 77.4% and allowed cracks to be formed 45 days after manufacturing (a time until crack formation occurred after manufacturing), thereby having low resistance to the frost damage.

Further, the comparison example 2, which was the conventional ALC product having resistance to the frost damage, was manufactured through the same procedures and with the same raw materials as those selected for the first embodiment, except for aluminium which was added in 0.05 part by weight in the comparison example 2. The comparison example 2 showed a bulk specific gravity, an average diameter of air voids and fineness of micro pore which were the substantially the same as those of the comparison example 1, but exhibited a time until occurrence of crack formation of 120 days after manufacturing which was longer than that of the comparison example 1 owing to a fact that the comparison example 2 contained dimethyl polysiloxane of 0.36 part by weight and had a low coefficient of water absorption of 7.9% by volume. However, a percentage of volume change of the comparison example 2 could not be measured since it was broken after repeating 25 cycles of the freezing and thawing test. This breakage was caused due to a fact that the comparison example 2 had a low bulk specific gravity of 0.48 and too low a coefficient of water absorption, whereby the water repellent imparted too high a water repellent characteristic to the comparison example 2, allowed water to be locally condensed and caused the scaling of the surface layers.

In contrast, the first embodiment of the present invention had a high bulk specific gravity of 0.63. contained dimethyl polysiloxane of 0.36% by weight, had high fineness of micro pore of 2.66 and the small average diameter of air voids of 0.53 mm, thereby exhibiting low water permeability and a high coefficient of water absorption of 12.5% by volume. As a result, the first embodiment had a high percentage of volume change of 83.6% and allowed cracks to be formed after a long time of 171 days after manufacturing and had remarkably improved resistance to the frost damage.

Second embodiment

The second embodiment was manufactured through the same procedures and with the same raw materials as those selected for the first embodiment, except for aluminium which was added in 0.03 part by weight in the second embodiment, and subjected to the same measurements and tests as those effected on the first embodiment. The second embodiment exhibited resistance to the frost damage which was improved as compared with that of the first embodiment owing to a fact that the second embodiment had a bulk specific gravity and fineness of micro pore which were enhanced as compared with those of the first embodiment as is seen from Table 1 and the second embodiment had an average diameter of air voids which was smaller than that of the first embodiment.

Third embodiment

The third embodiment of the present invention was manufactured through the same procedures and with the same raw materials as those selected for the first embodiment, except for aluminium which was added in 0.02 part by weight in the third embodiment, and subjected to the same measurements and tests as those effected on the first embodiment. As is clear from Table 1, the third embodiment had a bulk specific gravity and fineness of micro pore which were enhanced as compared with those of the first embodiment, but the third embodiment had an average diameter of air voids which was smaller than that of the first embodiment, thereby being improved in resistance to the frost damage thereof.

Fourth embodiment

The fourth embodiment of the present invention was manufactured through the same procedures and with the same raw materials as those selected for the first embodiment, except for dimethyl polysiloxane which was added in 0.11 part by weight in the fourth embodiment, and subjected to the same measurements and tests as those effected on the first embodiment. The fourth embodiment allowed cracks to be formed 130 days after manufacturing owing to a fact that the fourth embodiment had a bulk specific gravity and fineness of micro pore which were the substantially the same as those of the first embodiment, but contained dimethyl polysiloxane of 0.10% by weight, and had a coefficient of water absorption of 22.7% by volume which was a little higher than that of the first embodiment and a percentage of volume change of 81.7% which was a little lower than that of the first embodiment as is seen from Table 1. The resistance to the frost damage was considered to be lowered when a content of dimethyl polysiloxane was lower than 0.10% by weight.

Fifth embodiment

The fifth embodiment of the present invention was manufactured through the same procedures and with the same raw materials as those selected for the first embodiment, except for dimethyl polysiloxane which was added in 1.10 parts by weight in the fifth embodiment, and subjected to the same measurements and tests as those effected on the first embodiment. The fifth embodiment allowed cracks to be formed 180 days after manufacturing owing to a fact that the fifth embodiment had a bulk specific gravity and fineness of micro pore which were the substantially the same as those of the first embodiment, but contained dimethyl polysiloxane of 0.99% by weight, and had a coefficient of water absorption of 10.1% by volume which was a little lower than that of the first embodiment and a percentage of volume change of 81.2% which was a little lower than that of the first embodiment as is seen from Table 1. The resistance to the frost damage was considered to be lowered when a content of dimethyl polysiloxane exceeded 1.0% by weight.

Sixth embodiment

The sixth embodiment of the present invention was manufactured through the same procedures and with the same raw materials as those selected for the first embodiment, except for aluminium powder which had a particle size of 35 microns in the sixth embodiment. Though the sixth embodiment contained dimethyl polysiloxane at the same ratio as that selected for the first embodiment and exhibited a bulk specific gravity and a coefficient of water absorption which were the substantially the same as those of the first embodiment, the sixth embodiment had a small average diameter of air voids of 0.45 mm and high fineness of micro pore of 2.73 as is seen from Table 1. Owing to the fact that the sixth embodiment had the average diameter of air voids and the fineness of micro pore which were smaller than those of the first embodiment, the sixth embodiment exhibited a high percentage of volume change of 89.7%, allowed cracks to be formed 180 days after manufacturing and had remarkably improved resistance to the frost damage.

Seventh embodiment

The seventh embodiment of the present invention was manufactured through the same procedures and with the same raw materials as those selected for the sixth embodiment, except for an aging time in the autoclave which was set at four hours for the seventh embodiment, and subjected to the same measurements and tests which were effected on the first embodiment. As is seen from Table 1, the seventh embodiment had a bulk specific gravity and a coefficient of water absorption which were the substantially the same as those of the sixth embodiment, and contained dimethyl polysiloxane at the same ratio as that in the sixth embodiment. Owing to a fact that the seventh embodiment had an average diameter of air voids of 0.53 mm and fineness of micro pore of 3.04, the seventh embodiment had a percentage of volume change of 92.1% which was the highest of those of all the embodiments of the present invention, allowed cracks to be formed 175 days after manufacturing and exhibited excellent resistance to the frost damage.

Eighth embodiment

The eighth embodiment of the present invention was manufactured through the same procedures and with the same raw materials as those selected for the sixth embodiment, except for a water solid ratio in a slurry which was selected at 60 parts by weight for the eighth embodiment, and subjected to the same measurements and tests which were effected on the first embodiment. In spite of a fact that the eighth embodiment had a bulk specific gravity and a coefficient of water absorption which were the substantially the same as those of the sixth embodiment and contained dimethyl polysiloxane at the same ratio as that in the sixth embodiment as is seen from Table 1, the eighth embodiment had an average diameter of air voids of 0.53 mm and fineness of micro pore of 2.97, thereby exhibiting a high percentage of volume change of 91.5% and allowing cracks to be formed 170 days after manufacturing. The eighth embodiment also exhibited excellent resistance to the frost damage.

As is understood from the results obtained by the measurements and tests described above, the ordinary ALC products which have large average diameters of air voids and small bulk specific gravities exhibit small fineness of micro pore, low percentages of volume change and allow cracks to be formed short times after manufacturing, thereby being low in the resistance to the frost damage. Further, the conventional ALC products containing dimethyl polysiloxane for obtaining the resistance to the frost damage have remarkably a prolonged time until crack formation occurs, but are broken after 25 cycles in the freezing and thawing test and are low in overall resistance to the frost damage. In contrast, the ALC products preferred as the embodiments of the present invention have high percentages of volume change of at least 81,2%, allow cracks to be formed at least 130 days after manufacturing and are excellent in the overall resistance to the frost damage.

Industrial Applicability

As is understood from the foregoing description, the autoclaved lightweight concrete according to the present invention is excellent in the resistance to the frost damage and therefore usable for outside walls of buildings in cold districts in which the conventional ALC products are not suited for use.

**Claims**

1. Autoclaved lightweight concrete containing a siliceous and a calcareous source as main raw materials, and manufactured by aging the raw materials at a high temperature and under a high pressure, characterized in that the autoclaved lightweight concrete has a bulk specific gravity of 0.60 to 1.0, contains a silicon oil at 0.1 to 1.0% by weight has a fineness of micro pore of at least 2.5 and has a percentage of volume change higher than 81,2%.

2. Autoclaved lightweight concrete according to Claim 1 characterized in that said autoclaved lightweight concrete has a coefficient of water absorption within a range from 10 to 25% by volume.

**Patentansprüche**

1. Autoklav-Leichtbeton, der einen kieselsäurehaltigen und einen kalkhaltigen Ausgangsstoff als Hauptrohmaterial aufweist, und durch Altern des Rohmaterials bei einer hohen Temperatur und unter einem hohem Druck hergestellt wird,
   **dadurch gekennzeichnet,** daß
   der Autoklav-Leichtbeton ein Raumgewicht von 0,60 bis 1,0 aufweist, 0,1 bis 1,0 Gew.% Silikonöl enthält, eine Feinheit der Mikroporen von mindestens 2,5 und einen prozentualen Anteil der Volumenänderung höher als 81,2 % aufweist.

2. Autoklav-Leichtbeton nach Anspruch 1,
   **dadurch gekennzeichnet,** daß
   der Autoklav-Leichtbeton einen Wasserabsorptionskoeffizienten im Bereich von 10 bis 25 Vol.% aufweist.

**Revendications**

1. Béton léger autoclavé contenant une source siliceuse et une source calcaire comme matières premières, et fabriqué par vieillissement des matières premières à température élevée et sous une pression élevée, caractérisé en ce que le béton léger autoclavé a une densité apparente de 0,60 à 1,0, contient une huile de silicone à raison de 0,1 à 1,0% par poids, a une finesse de micropores d'au moins 2,5 et a un pourcentage de changement de volume supérieur à 81,2%.

2. Béton léger autoclavé selon la Revendication 1 caractérisé en ce que ledit béton léger autoclavé a un coefficient d'absorption d'eau compris dans la gamme de 10 à 25% par volume.